# EUROPEAN PATENT SPECIFICATION

(11) **EP 2 598 893 B1**
(45) Date of publication and mention of the grant of the patent: **30.06.2021**
(21) Application number: 11743132.0
(22) Date of filing: 26.07.2011
(51) Int. Cl.: G01N 35/10, B65D 47/20, B01L 3/14

(54) **REAGENT BOTTLES, VALVES THEREFOR, WASHING MODULES AND METHODS AND APPARATUS FOR DISPENSING REAGENTS**
REAGENZIENFLASCHEN, VENTILE DAFÜR, WASCHMODULE SOWIE VERFAHREN UND VORRICHTUNG ZUR AUSGABE VON REAGENZIEN
FLACONS DE RÉACTIF, SOUPAPES POUR CES FLACONS, MODULES DE LAVAGE ET PROCÉDÉS ET DISPOSITIFS POUR DISTRIBUER DES RÉACTIFS

(30) Priority: 26.07.2010 GB 201012494
(43) Date of publication of application: 05.06.2013
(73) Proprietor: Randox Laboratories Ltd., Crumlin, County Antrim BT29 4QY (GB)
(72) Inventor: WILSON, Gareth, Northern Ireland BT66 7QE (GB); WRIGGLESWORTH, Carl, Northern Ireland BT29 4YD (GB); FITZGERALD, Peter, Northern Ireland BT29 4QY (GB); LAMONT, John, Northern Ireland BT29 4QY (GB); MCCONNELL, Ivan, Northern Ireland BT29 4QY (GB)
(74) Representative: Gill Jennings & Every LLP
(86) International application number: PCT/GB2011/051425
(87) International publication number: WO 2012/013970

(56) References cited:
- US-A- 6 050 435
- US-A1- 2006 088 446
- US-A1- 2009 325 309
- US-B1- 6 716 396
- None

## Description

This invention relates to valves for reagent bottles, reagent bottles, washing modules and techniques for dispensing reagents, all for use in analysers such as diagnostic analysing systems.

Automated diagnostic analysers use chemical reagents to perform tests on various types of samples. Once a reagent bottle is opened the contents are exposed to air. This gradually degrades the reagent and limits the length of time it can be used once open - this is referred to as "Open Stability". Reagents are reactive chemicals which, compared with inert substances such as water and other diluents, have a very short shelf life. For instance, typical reactants can only be exposed to air for a matter of days before they must be disposed of. It is desirable to extend the lifetime of the reagents in order to minimise wastage and reduce the frequency of replenishing.

Conventional reagent bottle closures have included lids such as screw-on caps or clip-on lids which are usually manually engaged with the bottle and manually removed at time of use. As a result, the bottles are typically left open for the duration of a series of tests, e.g. many hours or even days. Automated systems for the removal and replacement of such lids are feasible but mechanically complex and prone to breakdowns. Some alternative arrangements have been proposed such as that disclosed in US-A-6375021, in which a self-closing bottle cap is formed with a hinge-mounted cover plate. The cover plate is easily pushed aside upon contact with a swab stick, and pivots aside and upward allowing the swab stick to enter the bottle. Upon removal, the cover plate returns to its original position under the action of gravity. Whilst such arrangements provide some benefit, however, the degree of sealing achieved is often not high and, moreover, the complex mechanical construction of the closure is expensive and prone to breakage.

Presently disclosed is a system for extending the viable life of a diagnostic reagent by minimising its interaction with atmosphere. Whilst the following description focuses on an automated system, the methodology could equally well be applied to a manual aspiration (or other dispensing) system.

US-A-2006088446 describes a flexible device for covering containers for liquids, which device can be pierced by the action of a rod-shaped object and, after removal of the rod-shaped object, returns again to its original shape.

US-B-6716396 relates to a cap which can form an essentially leak-proof seal with a vessel capable of receiving fluid specimens for clinical analysis and diagnosis. To minimize potentially contaminating contact between the fluid specimen and humans or the environment, a cap is provided which is penetrable by a plastic pipette tip or other fluid transfer device, and may include a plurality of striations which were discovered to further improve penetrability of the cap. In this way, substances can be dispensed into or withdrawn from the vessel without having to physically separate the cap from the vessel. Also featured are fluid transfer devices and caps having surface ribs and/or grooves which aid in creating passageways for venting displaced air from a penetrated collection device.

US-A-2009325309 concerns a reagent delivery system for an apparatus for processing of biological samples arranged on microscope slides, comprising a reagent section having one or more reagent containers; a slide section in which at least one microscope slide is arranged; a probe for dispensing a portion of reagent onto a predetermined microscope slide, and means for handling the probe. The probe comprises a continuous prove tubing element extending through a rigid probe member and connecting the probe tip to a pneumatic pressure regulation device. The reagent containers are adapted for cooperation with the probe tip. In this manner a high though-put and a very low carry over of fluid residues is achieved since there is no assembled parts making up the inside volume of the probe in which the fluid may be retained.

The present invention makes use of a valve for a reagent bottle, the valve comprising a resilient membrane configured to extend across an opening in the reagent bottle, the resilient membrane having at least one slit extending therethrough.

Thus, a key concept of the system is to limit the exposure of the reagent to the air by minimising air circulation into and out of the reagent bottle. This can be done for example using a self-sealing valve, e.g. a silicone or rubber cross-slit valve, at the neck of the bottle that can be opened by means of a probe or sleeve pushing through the valve. Once the probe is removed the valve self-closes again to reseal the bottle, thereby excluding the atmosphere and extending the shelf-life of the reactant. A "slit" is a cut through the membrane, the edges of which preferably wholly contact one another when the membrane is not under stress, so as to form a atmospheric seal. "Slits" can be straight or curved or both.

By forming the closure from a resilient material in this way, a highly effective seal can be achieved. The construction requires no moving parts and is thus robust and inexpensive. Further, since the seal opens only to the extent required to accommodate the passage of the probe or sleeve therethrough, the degree of exposure of the reactant to the environment is kept to a minimum not only before and after the dispensing procedure, but also during.

Preferably, the membrane is adapted to undergo a reversible deformation in order to accommodate the passage of a probe through the at least one slit, and to revert to a sealed configuration in which the slit is substantially closed upon removal of the probe, whereby the valve is self-sealing. In the closed position, the edges of the slits should preferably meet one another along their full length, such that no opening remains. This ensures that the seal acts as an atmospheric barrier, excluding air and humidity from the bottle interior. In preferred examples, the membrane has at least two slits extending through the membrane, the at least two slits intersecting one another preferably at a single position. Advantageously, the angle between angularly adjacent pairs of the at least two slits is substantially equal, preferably approximately 90 degrees. In a desirable implementation, the at least two slits are arranged to form a cross-slit.

The resilient membrane could be formed of any suitable material but preferably comprises a plastics material, preferably rubber or a silicone-based polymer. Silicone is most preferred since the material is both inert and resistant to a wide variety of reagents, and also possesses high resilience leading to reliable self-closing of the valve.

To ensure a tight seal, the at least one slit is preferably a post-moulded cut. That is, the valve is formed in two steps, cutting the slit through the membrane after it has been moulded into shape. Preferably a blade is used to carry out the cutting such that no material is removed. This should be contrasted for example with slits made at the time of moulding a membrane, in which case there will inevitably be regions in which the two edges of each slit do not contact one another when the valve is in the closed position.

The invention valve described above could be manufactured by moulding the resilient membrane and then forming the at least one slit by cutting through the resilient membrane with substantially no removal of material.

Valves of the sort described above have not previously been used in the field of reactant bottles, which are commonly closed using a lid such as a screw top in order to achieve the necessary atmospheric seal. The lid must be removed prior to use of the bottle and replaced afterwards. This not only requires additional user input and handling of potentially hazardous substances, but also leaves the bottle uncovered during the period of use. Hence this disclosure contemplates the use of a valve as described above for closing a reagent bottle in a medical device, preferably an analyser for performing medical, chemical, proteomic, molecular and/or biochemical tests.

A reagent bottle for use in an analyser is also described, comprising a valve as described above. Preferably, the periphery of the resilient membrane is affixed to the reagent bottle around the edge of an aperture provided in the reagent bottle. In preferred examples, the valve is joined to the reagent bottle by over-moulding the reagent bottle with the flexible membrane such that the valve is integrated into the reagent bottle. Alternatively, the valve can be housed in an insert member fitted to the reagent bottle, the resilient membrane being affixed to the insert member. Preferably, the insert member is fitted to the reagent bottle inside a neck portion of the reagent bottle. The insert member may comprise a lid or cap fitted to the reagent bottle. Any suitable joining technique could be used - e.g. the insert member could be fitted to the reagent bottle by heat sealing, ultrasonic welding, an adhesive, or a mechanical fixture such as a snap fit or threaded screw fit. Similarly, the resilient membrane is preferably affixed to the reagent bottle or insert member by adhesive, ultrasonic welding, heat sealing or a mechanical fixture such as a clamp or press fit.

According to the present invention, a dispensing apparatus for dispensing a reagent from a reagent bottle as described above is provided, the dispensing apparatus comprising: a probe assembly having a probe adapted for insertion into the reagent bottle through the valve and an extraction mechanism for drawing reagent out of the reagent bottle through the probe, characterised by a valve opening assembly (29) adapted to open the valve (2) of the reagent bottle such that the probe (20) can pass through the valve without contacting the valve.
An added consideration with analysers is the carryover between different samples and reagents which can give inaccurate or incorrect readings. The use of a valve as described above can lead to the probe becoming contaminated with reagent on its surface at positions away from the probe tip: this is because reagent may be deposited on the valve membrane as a probe passes therethrough, and this may coat the sides of the probe as it is inserted or removed. Typical probe washing stations are configured only to clean the tip region of a probe: this is necessary in order to wash the probe sufficiently fast to maintain high throughput. To address this problem, the dispensing apparatus therefore comprises a valve opening assembly adapted to open the valve of the reagent bottle such that the probe can pass through the valve without contacting the valve. In this way, only the tip region of the probe will contact the reagent and can be washed in the usual way. For example, a method of eliminating the carryover effect now proposed involves opening the valve using a separately actuated sleeve and then passing the probe (e.g. an automated syringe) through this sleeve, isolating it from the valve and any residue on it. Hence, advantageously, the valve opening assembly comprises a sleeve and an actuator for abutting the sleeve against the resilient membrane of the valve so as to deform the membrane and thereby open the at least one slit such that the probe can pass therethrough.

Preferably, the actuator is adapted to insert the sleeve through the at least one slit such that the sleeve isolates the valve from the sleeve interior through which the probe can pass. Advantageously, the sleeve comprises a hollow tube of any cross-section such as circular or square. The tube need not have a complete circumference - e.g. the cross section could be "C" or "U" shaped. Any sufficiently rigid material could be used for the sleeve. In particular examples, the sleeve is formed of a metal or plastics material, preferably a corrosion resistant metal, a protectively coated metal or an inert polymer.

In certain preferred embodiments, the valve opening assembly further comprises a washing mechanism for washing the sleeve. For example, this may take the form of a washing station to which the sleeve can be moved when washing is required. The washing station could be provided in place of one or more reagent bottles on a reagent carousel, if supplied, or the sleeve could be moveable along a further axis towards a separate wash station.

Advantageously, the sleeve diameter is sufficiently large relative to the valve such that only the outer surface of the membrane is contacted by the sleeve. The sleeve and actuator should preferably be configured such that the sleeve does not contact any reagent inside the reagent bottle.

The dispensing apparatus preferably further comprises a probe drive mechanism for at least driving the probe into and out of the reagent bottle. A controller may be provided for controlling the extraction mechanism and/or the valve opening assembly and/or the probe drive mechanism.

Preferably, the apparatus is adapted to accommodate a plurality of reagent bottles wherein the probe assembly is movable relative to the plurality of reagent bottles such that the probe can extract reagent from each or at least some of the plurality of reagent bottles. For example, the bottles could be arranged on a carousel which is rotatable for interaction with the probe at a predetermined position. Alternatively, the probe could be movable between the different bottles.

Similarly, the valve opening assembly is preferably moveable relative to the plurality of reagent bottles such that it can open the valves of each or at least some of the bottles. In this way, a single valve opening assembly need be provided. Alternatively, a valve opening assembly could be provided for each reagent bottle.

A washing module for washing a probe may be used to extract reagent from a reagent bottle, the washing module being adapted to wash substantially the whole length of the probe. This is an alternative way of addressing the problem of cross contamination caused by the aforementioned valve, which can be used instead of (or in addition to) a valve opening assembly.

In a preferred implementation, a washing module for washing the probe used to extract reagent from a reagent bottle, comprises a chamber for accommodating the probe, a fluid input device adjacent the top of the chamber and a fluid extraction device adjacent the bottom of the chamber, whereby a flow of fluid through the chamber can be established. Preferably, the fluid input and extraction devices are arranged such that substantially the whole length of the probe is submersed in the flow of fluid. For instance, at least half of the length of the probe may be washed, more preferably at least 75% of the probe. Most advantageously, the washing module is adapted to wash at least a length of the probe corresponding to the height of the reagent bottle(s) from which the probe extracts reagents - i.e. the full section of the probe which is inserted into the regent bottle during reagent dispensation. In particular examples, the fluid input comprises one or more jets for inserting fluid at high pressure, and/or the fluid extraction device comprises a vacuum pump for extracting the fluid.

The invention also provides an analyser for performing chemical, proteomic and/or biochemical tests comprising a dispensing apparatus according to the invention. In general, the function of such analysers is to perform automated or semi-automated analysis of biological samples. For example, the analyser may be configured to perform immunoassays, proteomic or molecular assays.

In another aspect of the invention, a method of dispensing reagent(s) is provided, comprising: a) providing one or more reagent bottles each containing a reagent, wherein each reagent bottle has a valve comprising a resilient membrane configured to extend across an opening in the reagent bottle, the resilient membrane having at least one slit extending therethrough;
b1) opening the valve such that the probe can be inserted into the bottle without contacting the valve;
b2) inserting a probe through the valve of one of the reagent bottles;
c) extracting reagent from the bottle through the probe; and
d) removing the probe from the bottle such that the valve reseals.

Advantageously, the valve is opened by abutting a sleeve against the resilient membrane so as to open the at least one slit allowing passage of the probe therethrough. Preferably, the sleeve is inserted through the valve and the probe is inserted through the sleeve such that the probe is isolated from the valve by the sleeve. Advantageously, the sleeve does not contact the reagent in the bottle.

The method may also or alternatively involve washing substantially the whole length of the probe before or after performing steps b) to d). Where the valve is opened before insertion of the probe, preferably the method further comprises washing only the tip of the probe before or after performing steps b) to d).

Examples of valves, reagent bottles, washing modules and techniques for dispensing reagents will now be described with reference to the accompanying drawings, in which:-
Figure 1 shows a valve incorporated into an exemplary valve insert for a reagent bottle;
Figure 2 is an exploded view of the valve insert shown in Figure 1;
Figures 3a to d schematically depict four exemplary valves in plan view;
Figures 4a and 4b show an example of a reagent bottle, Figure 4b showing the valve insert separated from the bottle body;
Figure 5 depicts selected components of an embodiment of an apparatus for dispensing reagents;
Figure 6 is a cross section through a portion of the reagent bottle of Figure 4 during a dispensing step using the apparatus of Figure 5;
Figures 7(a), (b) and (c) show a probe washing module, Figure 7(a) showing an external perspective view of the module, Figure 7(b) showing a cut-away perspective view of the module, and Figure 7(c) showing a cross-section of the module; and
Figures 8(a) to (d) depict an example of a valve opening assembly in a further embodiment, together with a further example of a reagent bottle.

Components of an exemplary system using the principles of the present invention are described in turn below, alone and in combination with one another. It should be appreciated that any combination of the disclosed components could be utilised.

### Valve (or "seal insert")

A valve is provided for closing a reagent bottle and limiting contact between the atmosphere and the bottle contents. The valve or seal could be integrated or attached to the bottle in a number of ways including:
- Insert moulding - Directly integrated into the reagent bottle by over-moulding;
- Clip Insert - The valve is housed in a separate insert which is then inserted into the bottle neck (or other aperture) and held by e.g. snap fit detail or ultrasonic welding;
- Cap - the valve could be housed into a separate lid or cap which fits to the bottle by either a snap-fit detail or threaded screw fit.

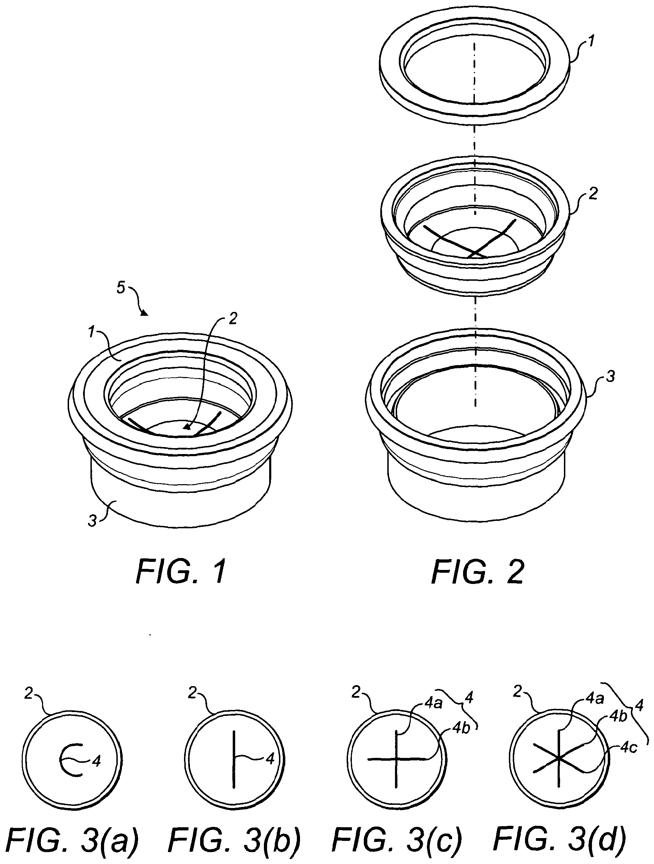

An example of a valve insert 5, comprising a valve 2 mounted into an insert member 3, is shown in Figures 1 and 2.

Taking for example the insert method: the valve 2, is held within a valve insert assembly 5, which can be inserted into the neck of a reagent bottle. The valve insert comprises three parts: an insert top or "cap" 1, the valve 2, and a valve seat 3. The valve 2 sits between the insert top 1 and valve seat 3. The top 1 and seat 3 are then joined together, either through press fit, a form of adhesive or ultrasonic welding. This keeps the valve static and allows a probe to pass through the valve.

The valve 2 includes a membrane made for example of rubber or silicone or any other resilient or flexible material, with at least one slit 4 passing therethrough. The slit arrangement through the membrane could take any desirable form such as a single (straight or curved) slit, a cross slit (i.e. two intersecting slits) or multiple slits (e.g. 3 or more) which preferably intersect at a single (central) point. Some examples are shown in Figures 3a to d.

In the present example, the valve has a diameter (corresponding to the approximately flat, circular portion of the membrane) of around 10 mm. Each of the two slits (approximately half of each is visible in Figure 2) has a length of around 8mm. The membrane has a thickness of around 0.2 mm, although thicker membranes (e.g. 0.3 mm to 1 mm thickness) are also envisaged.

Some alternative slit configurations are shown in Figure 3. Figure 3a shows a valve 2 having a single slit 4 following a curved path. Figure 3b shows a valve 2 having a single straight slit 4. In Figure 3c, the slit arrangement 4 comprises two straight slits 4a and 4b which intersect one another to form a cross-shaped slit. In this case the two slits make an angle of approximately 90 degrees: this is preferred but not essential. Figure 3d shows an example in which the slit arrangement 4 comprises three intersecting slits 4a, 4b and 4c which again are arranged to make substantially equal angles with one another: here the angle between two adjacent slits is around 60 degrees. The point of intersection is preferably at approximately the centre of the valve 2 but this is not essential.

In each case, the slit(s) are configured such that in its default position (when no stress is applied to the valve), the slit is substantially closed along its full length: that is, no open region of the membrane remains. This is desirable in order to ensure that the valve provides a full atmospheric seal. The fully closed membrane is substantially flat, or may lie in a (gently) curved plane in which case the convex side of the curve preferably faces the interior of the reagent bottle in use. When a probe or sleeve (described below) is pressed against the valve, the slit arrangement opens by undergoing a reversible deformation to permit passage of the component therethrough.

To achieve a tight seal, the valve 2 is preferably manufactured in two steps. First, the membrane is formed into the required shape, e.g. by injection moulding. Secondly, the one or more slits 4 are cut or sliced through the membrane using a sharp blade for example. In this way, there is no (or minimal) removal of the membrane material from the slit region. As such, in its closed configuration, the two cut edges of the slit meet one another exactly, forming a wholly closed seal.

### Bottle and Seal Insert Assembly

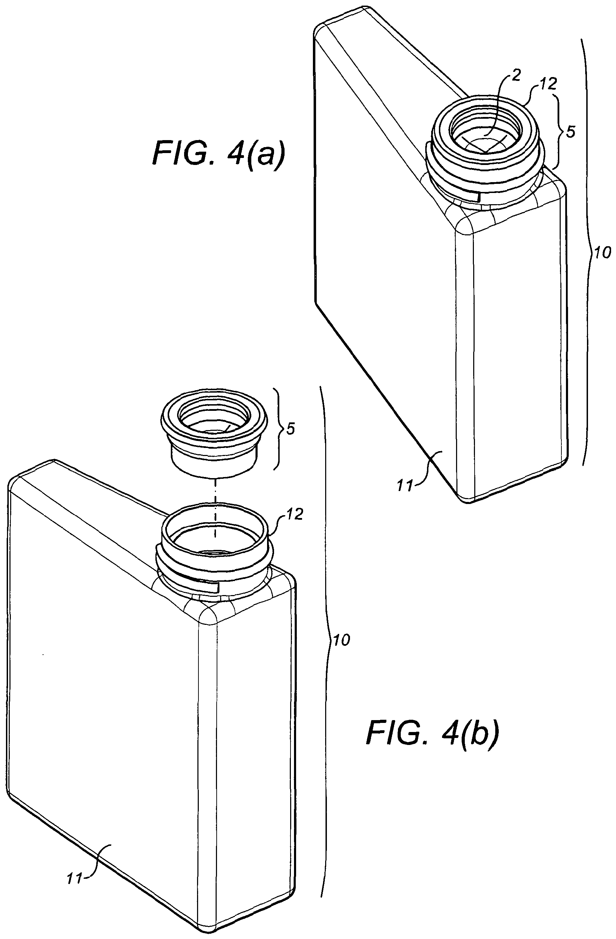

An example of a reagent bottle 10 comprising a valve 2 as described above is shown in Figures 4a and 4b. In this example, the valve 2 is fitted using a seal insert 5 as described above, although other arrangements are possible as already mentioned. The bottle 10 comprises a bottle body 11, for containing a volume of reagent, a neck 12 through which the interior of the bottle body 11 may be accessed and the seal insert assembly 5. The neck 12 is typically integrally joined to the bottle body 11. The seal insert assembly 5 is preferably inserted into the neck 12 of the reagent bottle 10. The seal insert 5 can be joined to the reagent bottle using a press fit or Ultrasonic Welding for example.

### Opening the Valves - Dispensing apparatus and method

The dispensing apparatus 30 comprises at least a probe 20 and a drive module 21 (collectively a "probe assembly") for moving the probe 20 along at least one axis, e.g. into and out of a reagent bottle 10. The probe 20 either comprises or is connected to an extraction mechanism for drawing reagent through the probe. For example, the probe could be a syringe or could be connected to a pump.

A probe 20, such as a syringe, would be able pass directly through the valve 2 easily, although by passing through it, it will come into contact with the valve surface. As indicated above, this can potentially cause reagent carry-over issues on the probe surface. This could be problematic on a system using multiple reagents onboard which are aspirated (dispensed) by the same probe.

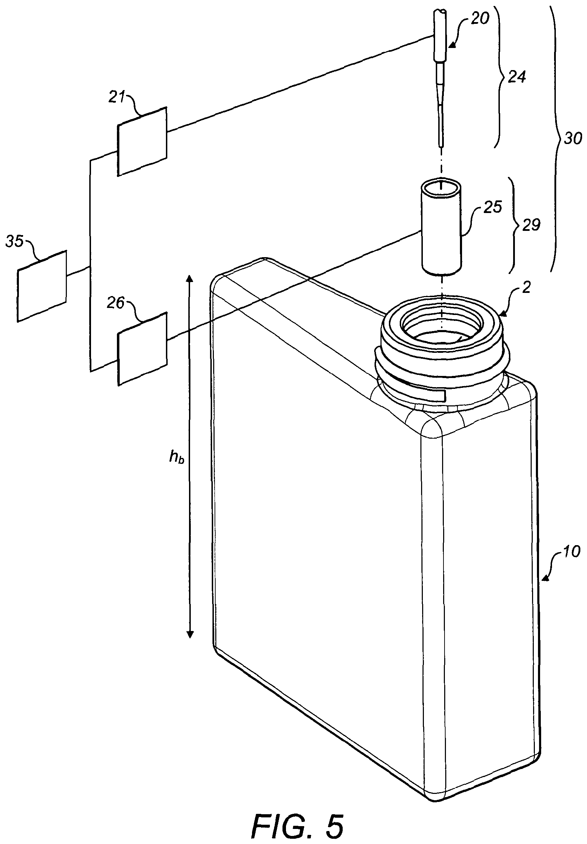

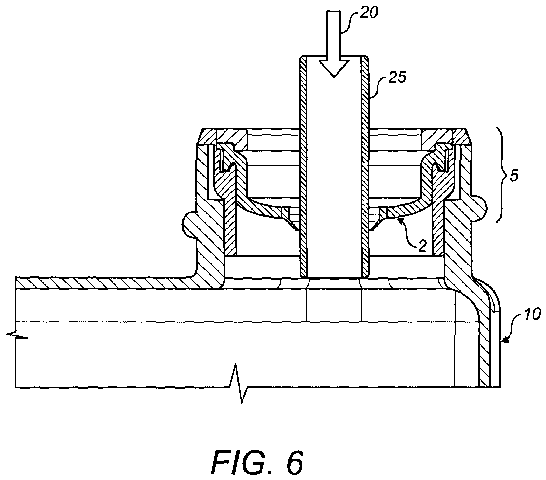

To address this problem, a valve opening assembly 29 may be provided, and an example of such apparatus is shown in Figures 5 and 6. A concept has been drawn up in which a sleeve 25 is entered into the bottle 10 first to open the valve 2. The sleeve 25 is moved by an actuator 26 so as to abut and apply a pressure to the valve 2, thereby deforming the membrane and opening the slit arrangement 4. The diameter of the tube / sleeve 25 should preferably ensure that the sleeve only contacts the outer surface of the valve 2 (i.e. that facing away from the interior of the bottle body 11 when the valve 2 is closed) and therefore not contact any of the reagent. The sleeve 11 is also isolated from the automated probe system 24 (i.e. spaced from the probe 20) so will not have any risk of transferring reagent from the sleeve 25 on to the probe 20. The probe 20 can then pass through the tube 25 and therefore not come into contact with any surface and therefore have direct access to the reagent.

Drive means 21 and 26 for moving the probe 20 and, separately, the sleeve 25, may be provided. Both drive means may operate on the same principle (e.g. linear actuators, as described below), although this is not essential. Alternatively the same drive means could be used to drive both the probe 20 and the sleeve 25. For instance, one motor could be used to drive both assemblies using for instance a clutch to disengage and halt the sleeve 25 once it is inserted into the valve 2. Other examples will be given below.

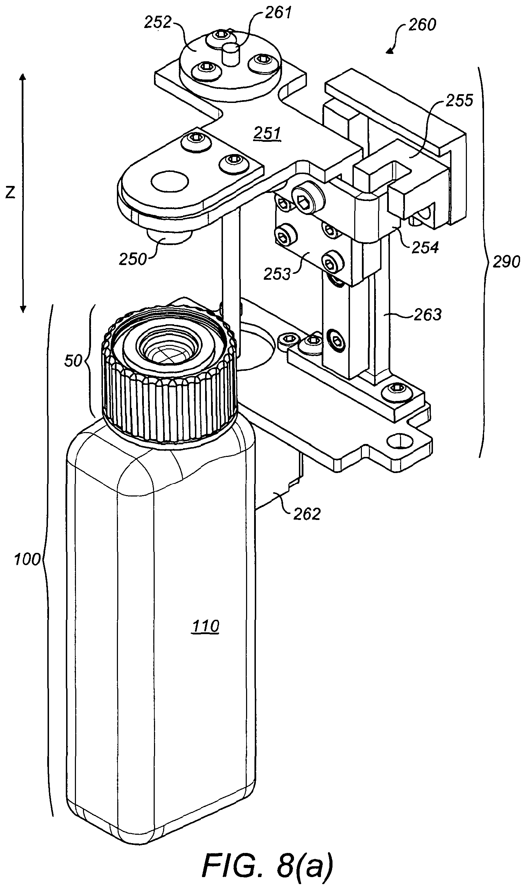

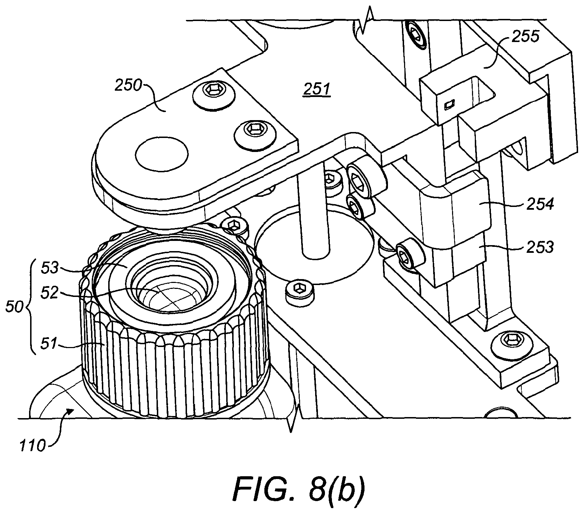

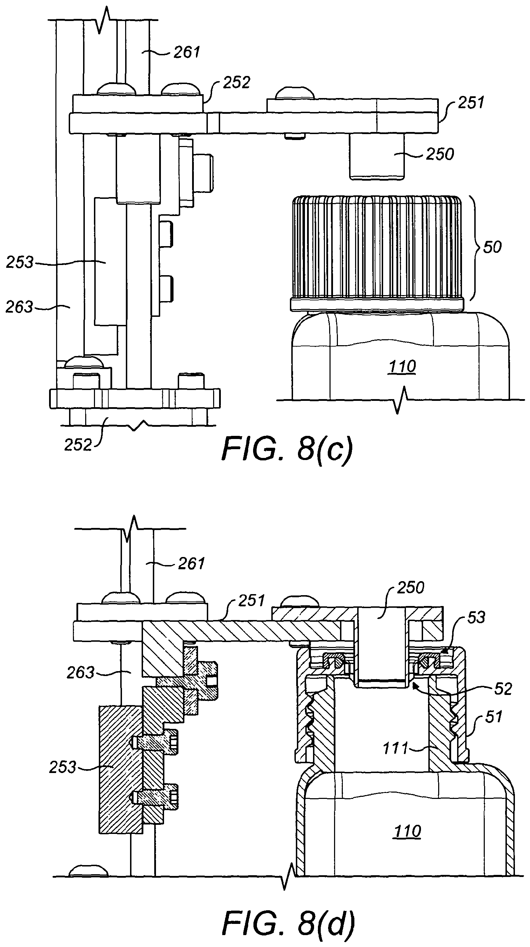

Figures 8(a) to (d) illustrate a further embodiment of a valve opening assembly 290, used in conjunction with a reagent bottle 100 according to another embodiment. In this embodiment, the valve is incorporated into a cap 50 which is screwed onto the bottle body 110. As shown best in Figure 8(b), the cap 50 comprises an outer casing 51 adapted for manual gripping and rotation. The casing has an internal thread as shown in Figure 8(d) which engages an external thread on a neck portion 111 of the bottle. The valve membrane 52 has a similar configuration to that described above with reference to Figure 1, comprising a cross slit in this example. The membrane 52 is affixed in position by a clamp component 53 which clips over the periphery of the membrane 52 to a raised feature provided on the upper surface of casing 51, as shown in Figure 8(d). A further lid (not shown) may optionally be provided to protect the valve prior to use of the reagent bottle or during storage. This would clip over the clamp component 53 and could be removed manually or with the use of a suitable tool.

The valve opening assembly 290 is positioned as shown relative to the reagent bottle from which reagent is to be dispensed. As described below, typically the modules will not be fixed in this relative position but rather will be relatively movable so that the valve opening assembly can be used to serve a plurality of reagent bottles.

The opening sleeve 250 of the assembly 290 is mounted to a linear actuator. A carriage 251 supports the opening sleeve 250 and is itself mounted on a threaded shaft 261 via a plate 252 equipped with an internal thread. The threaded shaft is aligned with the desired direction of motion of the sleeve 250, which in this case is substantially vertical. The carriage 251 includes a flange 253 adapted to slidably engage a guide rail 263 which is arranged parallel to the threaded shaft 261. At one end of the threaded shaft 261, a motor 262 is provided. Upon actuation of the motor 262, the threaded shaft rotates causing the carriage 251, and the opening sleeve mounted thereon, to move up or down along the direction indicated by arrow Z, depending on the direction of rotation. A sensor 255 may be provided for detecting the position of the sleeve, and in this case this takes the form of a light gate 255. The carriage 251 carries a flag 254 configured to intercept the light path within the gate when the carriage approaches the uppermost extremity of the threaded shaft 261. If desired, a further sensor could be provided for sensing the arrival of the carriage at the lower end of the shaft also.

Figure 8(c) is a side view showing the opening sleeve 250 approaching the cap 50, and Figure 8(d) is a cross section showing the opening action of the sleeve once it has contacted the valve. It will be seen that the sleeve 250 deflects the membrane 52 causing the slit arrangement to open. A probe 20 such as those depicted above can then be inserted into the reagent bottle 100 through the sleeve 250 without contacting the valve membrane 52. Once the reagent has been dispensed, the probe is withdrawn and the valve 52 close by moving the sleeve 250 upwards, which allows the resilient membrane to return to its original, closed, position.

The probe 20 can be carried on a linear actuator similar to that used in opening module 290. Alternatively, the probe 20 could be driven by the same linear actuator used to drive the sleeve 250, with a means being provided to allow the sleeve to stop and stay in position while the probe continued into the reagent bottle. This could take the form, for instance, of a spring and slide mechanism or a separate sub-drive stage for the probe.

This sleeve 25 / 250 would preferably be mechanically actuated to automate the process and could include a wash system. For instance, a wash station may be provided on a reagent carousel carrying the reagent bottles, in place of one or more of the reagent bottles. Alternatively, a wash station could be located remotely and the actuation mechanism used to move the sleeve configured to move the sleeve in more than one axis so that it can be transferred to the wash station when washing is required. At the wash station, the sleeve would be inserted at least partially into the station in which cleaning takes place, e.g. by submersion into a cleaning fluid, and/or by spraying the sleeve with cleaning fluid (such as water). The sleeve could for example be made from a corrosion resistant metal, protectively coated metal or an inert polymer.

The probe assembly 24 and the valve opening assembly 29 / 290 may each be operated by a controller 35, such as a computer or CPU. Alternatively, individual controllers may be provided for operation of each sub-system. The or each controller 35 may form part of an analyser in which the dispensing system is provided, and could be incorporated within the analyser controller.

In practice, an analyser will typically include many reagent bottles 10 / 100, such as that described above, arranged for example on a carousel. A single probe assembly 24 may be used to extract reagent from each or at least some of the bottles. The carousel can rotate to a position where the probe 20 can be inserted into the desired bottle 10. A single valve opening assembly 29 / 290 , including a sleeve 25 / 250, may be provided to work in conjunction with the probe 20 to open the valve 2 of any bottle 10 presented to it. Alternatively, each bottle 10 could be provided with a dedicated valve opening assembly 29 / 290 which may be mounted on the carousel for example.

As an alternative to the valve opening assembly 29, or in addition, a whole probe wash could be used to clean the entire outer surface of a probe 20 after every use. For example, the probe could be inserted into a chamber and washed with water jets arranged at the top of the chamber. Water can be extracted from the bottom of the chamber using a vacuum.

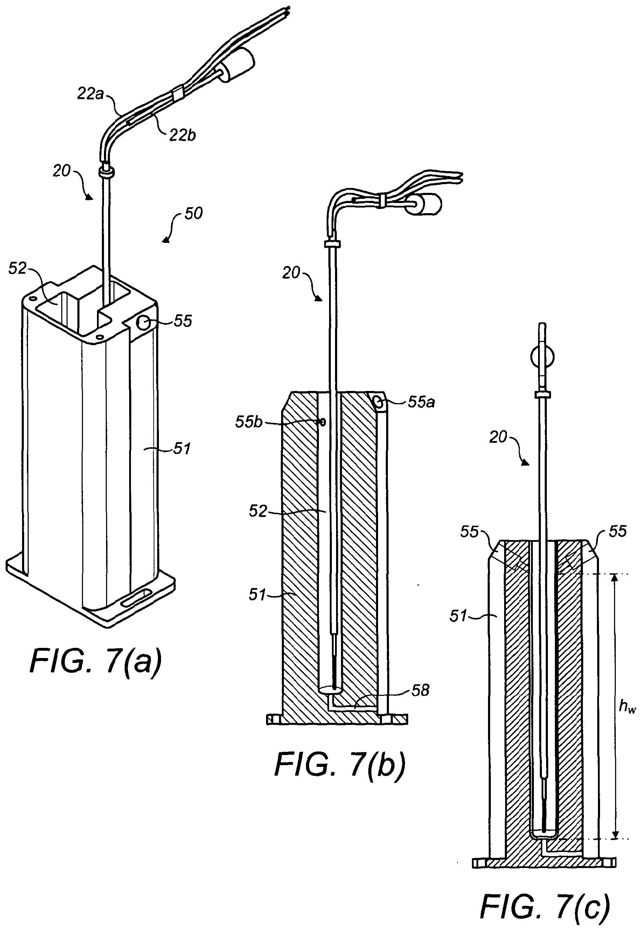

An example of such a washing module 50 is shown in Figure 7, in an external perspective view (a), a cut-away perspective view (b) and a cross-section (c). In each view, the probe 20 is shown in situ, extending into the module 50 as it would be located during a washing operation. As previously described, the probe 20 may comprise an elongate syringe-type component support by a drive means 21 (not shown). Wires 22a and 22b may optionally be provided, connected to the inner and outer walls of the probe 20 respectively, for capacitive liquid detection as is known in the art.

The washing module 50 comprises a body 51 housing a chamber 52 extending in a direction parallel to the long axis of the probe 20. As Figure 7 illustrates, a large proportion (more than 50%) of the length of the probe 20 can be accommodated within the chamber. At least a portion of the chamber 52 is sized to approach the probe closely (for instance the width of the portion may be only about 2 to 3 times the diameter of the probe, in this example) and, in this region, at least one inlet 55 is provided though the wall of the body 51. In the present example two such inlets 55 are provided, on opposite sides of the chamber 52, although more or fewer inlets could be used. The narrow nature of this region of the chamber 52 assists in washing the full length of probe 20 since the fluid injected by inlets 52 strikes the chamber walls and splashes back towards the probe, creating a stream of fast-moving water surrounding and submerging the probe.

Each inlet 55 comprises a passageway through the wall of body 51 though which water (or another cleaning fluid) is passed into the chamber 52 in use. Typically, each inlet 55 will be connected to a hose or tube for supplying the fluid, and the flow of fluid may be controlled by a pump or piston (not shown). The inlets are preferably angled down towards the chamber 52 so that the cleaning fluid travels down the length of the probe 20 towards the base of the chamber, minimising any escape of fluid from the top of the module. As shown in Figure 7(b), the entrance aperture 55a of the inlet (visible on the exterior of the body 51) is larger than the exit aperture 55b of the inlet (visible on the interior wall of the chamber 52). The larger diameter region is a threaded section which accommodates and engages a pressure connection to an input hose in use. In some examples, the diameter of the smaller diameter region may itself change along its length (not shown in Figure 7. For example, a narrowing of the inlet would assist in forming the incoming fluid into a jet by increasing its pressure and hence the flow velocity. To achieve this, the internal diameter of the inlet could change step-wise from a first, larger, diameter to a second, reduced, diameter at one point along the length of the passageway. However, in other examples, the diameter reduction may involve several such steps, or the inlets could have a frustoconical shape with a gradual reduction in diameter.

At or adjacent to the bottom of the chamber 52, an outlet passageway 58 is provided for extracting fluid from the chamber 52. This may be connected in use to a pump or other fluid extraction device.

The height h_{w} of the chamber (from its base up to the location of inlets 55) is configured to accept substantially the whole of probe 20, such that any contaminant carried along its sides can be removed. For instance in one example the height h_{w} may be at least 5cm, more preferably at least 10cm. In the present example, the chamber height is approximately 12cm. In general, the height of the chamber may be selected such that it can accommodate at least 50% of the length of the probe, more preferably around 75%. Typical probes have a length of around 16 cm from probe tip to the base of their supporting collar. As a minimum, it is preferred that the chamber height is at least that of the reagent bottles into which the probe is to be inserted. Figure 5 indicates the height of the reagent bottle, h_{b}, as extending between the base of the bottle 10 and the top of the seal 2.

The disclosed valves, reagent bottles, dispensing techniques and washing modules, and particularly their combination, extend the open-stability of Diagnostic Reagents by minimising air exchange while allowing access to a probe whilst minimising potential carry-over.

## Claims

1. A dispensing apparatus (30) for dispensing a reagent from a reagent bottle (10), the reagent bottle having a valve (2) comprising a resilient membrane configured to extend across an opening in the reagent bottle, the resilient membrane having at least one slit (4) extending therethrough, the dispensing apparatus comprising:
a probe assembly having a probe (20) adapted for insertion into the reagent bottle (10) through the valve and an extraction mechanism for drawing reagent out of the reagent bottle through the probe, and **characterised by**
a valve opening assembly (29) adapted to open the valve (2) of the reagent bottle such that the probe (20) can pass through the valve without contacting the valve.

2. A dispensing apparatus according to claim 1 wherein the valve opening assembly (29) comprises a sleeve (25) and an actuator (26) for abutting the sleeve against the resilient membrane of the valve so as to deform the membrane and thereby open the at least one slit (4) such that the probe can pass therethrough, wherein the actuator (26) is preferably adapted to insert the sleeve (25) through the at least one slit (4) such that the sleeve isolates the valve from the sleeve interior through which the probe can pass.

3. A dispensing apparatus according to claim 1 or claim 2 wherein the sleeve (25) comprises a hollow tube.

4. A dispensing apparatus according to claims 2 or 3 further comprising a washing mechanism for washing the sleeve (25).

5. A dispensing apparatus according to any of claims 2 to 4 wherein the sleeve diameter is sufficiently large relative to the valve such that only the outer surface of the membrane is contacted by the sleeve (25).

6. A dispensing apparatus according to any of the preceding claims further comprising a probe drive mechanism (21) for at least driving the probe (20) into and out of the reagent bottle (10).

7. A dispensing apparatus according to any of the preceding claims further comprising a controller (35) for controlling the extraction mechanism and/or the valve opening assembly and/or the probe drive mechanism.

8. A dispensing apparatus according to any of the preceding claims adapted to accommodate a plurality of reagent bottles (10), each reagent bottle having a valve (2) comprising a resilient membrane configured to extend across an opening in the reagent bottle, the resilient membrane having at least one slit (4) extending therethrough, wherein the probe assembly is movable relative to the plurality of reagent bottles such that the probe (20) can extract reagent from each or at least some of the plurality of reagent bottles.

9. A dispensing apparatus according to claim 8 wherein the valve opening assembly (29) is moveable relative to the plurality of reagent bottles (10) such that it can open the valves of each or at least some of the bottles.

10. A dispensing apparatus according to claim 8 wherein a valve opening assembly (29) is provided for each reagent bottle.

11. An analyser for performing medical, chemical, proteomic and/or biochemical tests, comprising a dispensing apparatus according to any of the preceding claims.

12. A method of dispensing reagent(s), comprising
a) providing one or more reagent bottles (10) each containing a reagent, wherein each reagent bottle has a valve (2) comprising a resilient membrane configured to extend across an opening in the reagent bottle, the resilient membrane having at least one slit (4) extending therethrough;
b1) opening the valve (2) such that the probe can be inserted into the bottle
without contacting the valve;
b2) inserting a probe (20) through the valve of one of the reagent bottles;
c) extracting reagent from the bottle through the probe; and
d) removing the probe from the bottle such that the valve reseals.

13. A method according to claim 12, wherein the valve(2) is opened by abutting a sleeve (25) against the resilient membrane so as to open the at least one slit (4) allowing passage of the probe therethrough, and
wherein preferably the sleeve (25) is inserted through the valve and the probe (20) is inserted through the sleeve such that the probe is isolated from the valve by the sleeve.

14. A method according to claim 13 wherein the sleeve (25) does not contact the reagent in the bottle.

15. A method according to any of claims 12 to 14, further comprising either washing substantially the whole length of the probe (20) before or after performing steps b) to d); or washing only the tip of the probe (20) before or after performing steps b) to d).

## Patentansprüche

1. Ausgabevorrichtung (30) zum Ausgeben eines Reagens aus einer Reagenzienflasche (10), wobei die Reagenzienflasche ein Ventil (2) aufweist, das eine elastische Membran umfasst, die ausgelegt ist, sich über eine Öffnung in der Reagenzienflasche zu erstrecken, wobei die elastische Membran zumindest einen Schlitz (4) aufweist, der sich dort hindurch erstreckt, wobei die Ausgabevorrichtung umfasst:
Eine Sondenanordnung, die eine zum Einführen in die Reagenzienflasche (10) angepasste Sonde (20) und einen Extraktionsmechanismus zum Herausziehen von Reagens aus der Reagenzienflasche durch die Sonde aufweist, und **gekennzeichnet durch**
eine Ventilöffnungsanordnung (29), die angepasst ist, das Ventil (2) der Reagenzienflasche derart zu öffnen, dass die Sonde (20) ohne Berührung des Ventils durch das Ventil hindurchgehen kann.

2. Ausgabevorrichtung nach Anspruch 1, wobei die Ventilöffnungsanordnung (29) eine Hülse (25) und ein Stellglied (26) zum Stoßen der Hülse gegen die elastische Membran des Ventils umfasst, um die Membran zu verformen und dadurch den zumindest einen Schlitz (4) derart zu öffnen, dass die Sonde dort hindurchgehen kann, wobei das Stellglied (26) vorzugsweise angepasst ist, die Hülse (25) durch den zumindest einen Schlitz (4) derart einzuführen, dass die Hülse das Ventil vom Hülseninnenraum isoliert, durch den die Sonde hindurchgehen kann.

3. Ausgabevorrichtung nach Anspruch 1 oder Anspruch 2, wobei die Hülse (25) ein hohles Rohr umfasst.

4. Ausgabevorrichtung nach Anspruch 2 oder 3, der ferner einen Waschmechanismus zum Waschen der Hülse (25) umfasst.

5. Ausgabevorrichtung nach irgendeinem der Ansprüche 2 bis 4, wobei der Hülsendurchmesser relativ zum Ventil genügend groß ist, derart, dass nur die Außenfläche der Membran von der Hülse (25) berührt wird.

6. Ausgabevorrichtung nach irgendeinem der vorhergehenden Ansprüche, die ferner einen Sonden-Antriebsmechanismus (21) umfasst, um die Sonde (20) zumindest in die und aus der Reagenzienflasche (10) zu treiben.

7. Ausgabevorrichtung nach irgendeinem der vorhergehenden Ansprüche, die ferner eine Steuereinheit (35) zum Steuern des Extraktionsmechanismus und/oder der Ventilöffnungsanordnung und/oder des Antriebsmechanismus der Sonde umfasst.

8. Ausgabevorrichtung nach irgendeinem der vorhergehenden Ansprüche, die angepasst ist, eine Vielzahl von Reagenzienflaschen (10) aufzunehmen, wobei jede Reagenzienflasche ein Ventil (2) aufweist, das eine elastische Membran umfasst, die ausgelegt ist, sich über eine Öffnung in der Reagenzienflasche zu erstrecken, wobei die elastische Membran zumindest einen Schlitz (4) aufweist, der sich dort hindurch erstreckt, wobei die Sondenanordnung relativ zur Vielzahl von Reagenzienflaschen beweglich ist, derart, dass die Sonde (20) Reagens aus jeder oder zumindest einigen der Vielzahl von Reagenzienflaschen herausziehen kann.

9. Ausgabevorrichtung nach Anspruch 8, wobei die Ventilöffnungsanordnung (29) relativ zur Vielzahl von Reagenzienflaschen (10) derart beweglich ist, dass sie die Ventile jeder oder zumindest einiger der Flaschen öffnen kann.

10. Ausgabevorrichtung nach Anspruch 8, wobei eine Ventilöffnungsanordnung (29) für jede Reagenzienflasche bereitgestellt ist.

11. Analysator zur Durchführung von medizinischen, chemischen, proteomischen und/oder biochemischen Tests, der eine Ausgabevorrichtung nach irgendeinem der vorhergehenden Ansprüche umfasst.

12. Verfahren zur Ausgabe von Reagens (Reagenzien), umfassend:
a) Bereitstellen einer oder mehrerer Reagenzienflaschen (10) jede ein Reagens enthaltend, wobei jede Reagenzienflasche ein Ventil (2) aufweist, das eine elastische Membran umfasst, die ausgelegt ist, sich über eine Öffnung in der Reagenzienflasche zu erstrecken, wobei die elastische Membran zumindest einen Schlitz (4) aufweist, der sich dort hindurch erstreckt;
b1) Öffnen des Ventils (2) derart, dass die Sonde ohne Berührung des Ventils in die Flasche eingeführt werden kann;
b2) Einführen einer Sonde (20) durch das Ventil einer der Reagenzienflaschen;
c) Herausziehen von Reagens aus der Flasche durch die Sonde; und
d) Entfernen der Sonde aus der Flasche derart, dass sich das Ventil wieder abdichtet.

13. Verfahren nach Anspruch 12, wobei das Ventil (2) durch Stoßen einer Hülse (25) gegen die elastische Membran geöffnet wird, um den zumindest einen Schlitz (4) zu öffnen, um Durchgang der Sonde dort hindurch, zu erlauben, und
wobei die Hülse (25) vorzugsweise durch das Ventil eingeführt wird und die Sonde (20) durch die Hülse derart eingeführt wird, dass die Sonde durch die Hülse vom Ventil isoliert ist.

14. Verfahren nach Anspruch 13, wobei die Muffe (25) das Reagens in der Reagenzienflasche nicht berührt.

15. Verfahren nach irgendeinem der Ansprüche 12 bis 14, das ferner entweder das Waschen im Wesentlichen der ganzen Länge der Probe (20) vor oder nach Durchführung der Schritte b) bis d); oder nur Waschen der Spitze der Sonde (20) vor oder nach Durchführung der Schritte b) bis d) umfasst.

## Revendications

1. Un appareil distributeur (30) conçu pour distribuer un réactif depuis une bouteille à réactif (10), et cette bouteille à réactif comporte une valve (2) qui a une membrane résiliente configurée pour s'implanter sur toute une ouverture de la bouteille à réactif, et cette membrane résiliente a au moins une fente (4) sur toute sa largeur, et cet appareil distributeur se compose des éléments suivants :
un ensemble sonde composé d'une sonde (20) spécialement adaptée pour s'insérer dans la bouteille à réactif (10) par le biais de la valve et un mécanisme d'extraction qui a pour but d'extraire le réactif depuis la bouteille à réactif et de le faire passer dans la sonde et **se caractérisant par** :
un ensemble d'ouverture de valve (29) qui est spécialement adapté pour ouvrir la valve (2) de la bouteille à réactif afin que la sonde (20) puisse s'introduire dans la valve sans entrer en contact avec cette valve.

2. L'appareil distributeur que décrit la revendication 1, si ce n'est que l'ensemble d'ouverture de la valve (29) comporte une gaine (25) et un actionneur (26) qui a pour but d'amener la gaine contre la membrane résiliente de la valve afin de déformer cette membrane et, par la même, d'ouvrir la ou les fentes (4) de façon à y introduire la sonde et, de préférence, cet actionneur (26) est spécialement adapté pour introduire la gaine (25) dans une fente (4), au nombre d'au moins un, de manière à isoler cette valve de l'intérieur de la gaine que peut ainsi traverser la sonde.

3. L'appareil distributeur que décrit la revendication 1 ou 2, si ce n'est que la gaine (25) comporte un tube creux.

4. L'appareil distributeur que décrit la revendication 2 ou 3, si ce n'est qu'il comporte, en outre, un mécanisme de lavage conçu pour laver la gaine (25).

5. L'appareil distributeur que décrit l'une ou l'autre des revendications 2 à 4, si ce n'est que le diamètre est suffisant, par rapport à la valve, pour qu'il y ait uniquement un contact entre la surface externe de la membrane et la gaine (25).

6. L'appareil distributeur que décrit l'une ou l'autre des revendications précédentes, si ce n'est qu'il comporte, en outre, un mécanisme d'entraînement de sonde (21) conçu, à titre minimum, pour entraîner la sone (20) dans la bouteille à réactif (10) et pour l'en faire sortir.

7. L'appareil distributeur que décrit l'une ou l'autre des revendications précédentes, si ce n'est qu'il comporte, en outre, un régulateur (35) conçu pour contrôler le mécanisme d'extraction et (ou) l'ensemble d'ouverture de valve et (ou) le mécanisme d'entraînement de la sonde.

8. L'appareil distributeur que décrit l'une ou l'autre des revendications précédentes, si ce n'est qu'il est spécialement adapté pour fonctionner avec une pluralité de bouteilles à réactif (10), et chaque bouteille à réactif a une valve (2) qui a une membrane résiliente configurée pour s'implanter sur toute une ouverture de la bouteille à réactif, et cette membrane résiliente a au moins une fente (4) sur toute sa largeur, et l'ensemble à sonde peut se déplacer par rapport à la pluralité de bouteilles à réactif, ce qui permet à cette sonde (20) d'extraire du réactif en provenance d'au moins une bouteille de cette pluralité de bouteilles à réactif.

9. L'appareil distributeur que décrit la revendication 8, si ce n'est que l'ensemble d'ouverture de valve (29) peut se déplacer par rapport à la pluralité de bouteilles à réactif (10), ce qui lui permet d'ouvrir les valves de chaque bouteille ou d'au moins une partie d'entre elles.

10. L'appareil distributeur que décrit la revendication 8, si ce n'est qu'il y a un ensemble d'ouverture de valve (29) pour chaque bouteille à réactif.

11. Un analyseur conçu pour effectuer des tests médicaux, chimiques, protéomiques et (ou) biochimiques, et comportant un appareil distributeur conforme aux descriptions des revendication ci-dessus.

12. Un procédé de distribution d'un ou plusieurs réactifs et ce procédé se compose des éléments suivants :
a) la fourniture d'une ou plusieurs bouteilles à réactif (10), chaque bouteille contient un réactif et chaque bouteille à réactif comporte une valve (2) qui a une membrane résiliente configurée pour s'implanter sur toute une ouverture de la bouteille à réactif, et cette membrane résiliente a au moins une fente (4) sur toute sa largeur
b1) l'ouverture de la valve (2) afin que la sonde puisse être insérée dans la bouteille sans toucher la valve
b2) l'insertion d'une sonde (20) dans la valve de l'une des bouteilles à réactif
c) l'extraction de réactif de la bouteille par le biais de la sonde et
d) le retrait de la sonde de la bouteille afin que la valve puisse retrouver son étanchéité.

13. Le procédé que décrit la revendication 12, si ce n'est que la valve (2) s'ouvre en amenant une gaine (25) contre la membrane résiliente de manière à ouvrir une fente (4), au nombre d'au moins 1 afin d'ouvrir un passage pour introduire la sonde et
et si ce n'est, de préférence, que la gaine (25) est introduite dans la gaine et que la sonde (20) est introduite dans la gaine de manière à isoler la sonde de la valve par l'entremise de la gaine.

14. Le procédé que décrit la revendication 13, si ce n'est que la gaine (25) n'entre pas en contact avec le réactif dans la bouteille.

15. Le procédé que décrit l'une ou l'autre des revendications 12 à 14, si ce n'est qu'il comporte, en outre, un lavage portant, essentiellement, sur toute la longueur de la sonde (20) avant ou après l'exécution des étapes b) à d) ou un lavage portant uniquement sur la pointe de la sonde (20) avant ou après l'exécution des étapes b) à d).
